# EUROPEAN PATENT APPLICATION

(11) **EP 4 606 869 A1**
(43) Date of publication of application: **27.08.2025**
(21) Application number: 24159121.3
(22) Date of filing: 22.02.2024
(51) Int. Cl.: C09D 11/102, C09D 11/30, C09D 11/322, D06P 1/44, D06P 1/52, D06P 5/30

(54) **PIGMENT INK FORMULATION FOR DOD INKJET PRINTING OF TEXTILE FABRICS**

(71) Applicant: Swiss Performance Chemicals AG, 4132 Muttenz (CH)
(72) Inventor: Mheidle, Mickael, 68390 Sausheim (FR)
(74) Representative: E. Blum & Co. AG

(57) **Abstract**

The present invention relates to a silicone- and fluorine-free water-based pigment piezoelectric drop-on-demand inkjet ink formulation for textile printing, and a process for manufacturing a printed textile fabric with said formulation.

## Description

### FIELD OF THE INVENTION

The present invention relates to the technical field of pigment ink formulations for piezoelectric drop-on-demand (DOD) inkjet printing of textile fabrics and processes for manufacturing printed textile fabrics by piezoelectric DOD inkjet printing.

### BACKGROUND OF THE INVENTION

Screen printing methods and roller printing methods have been extensively used in textile industry for printing images such as text, pictures or designs onto textile fabrics or the like such as woven fabrics, knitted fabrics and nonwoven fabrics. Recently textile inkjet printing methods have emerged as attracting alternative to the known textile printing methods because they enable image processing to be performed by computer and textile printing to be performed in a substantially plateless manner.

When the inkjet inks contain a pigment used as a colorant, a fixing resin is necessary to be added to an ink in order for the pigment to be fixed on the textile fabric. To improve the rubbing fastness, generally a high amount of resin is included in the ink which leads to a modification of the textile hand.

For example, US 2014/0210900 A1 describes an inkset for piezoelectric DOD inkjet textile printing, comprising a first ink having a pigment and a resin; and a second ink having a pigment, a resin and a particular emulsifier mixture. The first ink is used to form a base layer to which the second ink is attached on the cloth. The resin used in the inks is a water-dispersible urethane-based resin having a Tg lower than 0°C. The textile printing method involves a pretreatment process for applying a pretreatment agent containing a coagulant, which reacts with the components of an ink to the cloth, forming a first image with the first ink by attaching the first ink to the cloth; and forming a second image with the second ink by attaching the second ink to the first image. Although the inks appear to be compatible with a variety of textile fabrics, the inkjet printing method is time-consuming including two printing steps for attaching the first ink to the cloth, and the second ink to the image formed with the first ink, and requires a pretreatment step for applying a pretreatment agent to the fabric prior to the first printing step.

US 2019/0352528 A1 describes an aqueous pigment ink for textile inkjet printing with improved rubbing fastness. For improving the rubbing fastness a specific combination of a first water-dispersible resin and a water-dispersible polystyrene resin (second water-dispersible resin) in a specific weight percentage and a specific weight ratio is used. The first water-dispersible is a water-dispersible urethane resin, a water-dispersible (meth)acrylic resin or a water-dispersible styrene/(meth)acrylic resin. The total amount of the first water-dispersible resin and the second water-dispersible resin is from 7.2 to 15 wt-% based on the total mass of the ink, and the amount of the first water-dispersible resin is from 3 to 6 wt-% based on the total mass of the ink. To ensure a good color development, the textile fabric must be subjected to a pretreatment step with a pretreatment agent containing a cationic polymer or a polyvalent metal salt and a water-dispersible resin. The printing process of US 2019/0352528 A1 appears to be more expedient than the previous described one. Nevertheless, it requires also a pretreatment step prior to the inkjet printing and seems to be limited to polystyrene substrate.

Alternative techniques that have been proposed for improving the rubbing fastness include a method of protecting the printed image by coating the image with a resin layer containing no colorant as an overcoat. Such techniques lead also to a modification of the hand of the printed textile fabrics and require an additional coating step.

In consequence, there is still a need for pigment DOD inkjet ink formulations and DOD printing processes for textile fabrics that address the above-mentioned drawbacks. In particular, there is a need for DOD inkjet formulations that are versatile in terms of textile fabrics substrate, do not require additional time-consuming pretreatment step prior to the printing or coating step after the printing and provide printed textile fabrics with excellent rubbing fastness and color development properties and without impacting the textile hand.

### SUMMARY OF THE INVENTION

Accordingly, it is an object of the present invention to provide a water-based piezoelectric drop-on-demand (DOD) inkjet ink formulation for textile printing, wherein said formulation consists of:
- from 3 wt-% to 15.0 wt-% of a pigment dispersed within the formulation;
- a water-dispersible (meth)acrylic resin;
- a water-dispersible styrene-(meth)acrylic resin;
- a water-dispersible urethane resin;
- up to 2 wt-% of a surfactant;
- from 20 wt-% to 40 wt-% of 1,2,3-propanetriol;
- optionally one or more of a pH adjusting agent, a biocide, a thickening agent and a further water-miscible solvent; and
- water;
wherein
at least one of the water-dispersible (meth)acrylic resin, the water-dispersible styrene-(meth)acrylic resin and the water-dispersible urethane resin has a glass transition temperature (Tg) lower than 140°C and higher than or equal to 20°C;
at least one of the water-dispersible (meth)acrylic resin, the water-dispersible styrene-(meth)acrylic resin and the water-dispersible urethane resin has a glass transition temperature (Tg) lower than 20°C; and
a total amount of the water-dispersible (meth)acrylic resin, the water-dispersible styrene-(meth)acrylic resin and the water-dispersible urethane resin is from 7 wt-% to 10 wt-%;
wherein the wt-% are based on the total weight of the composition. The ink formulation has a viscosity from 4 cP to 9 cP, preferably from 4 to 7 cP, at 25°C and a shear rate of 200-400 s⁻¹. Advantageously, the DOD inkjet ink formulation is silicone- and fluorine-free.

A further aspect according to the present invention relates to a process for manufacturing a printed, optionally finished, textile fabric. The process comprises, preferably consists of, the following steps:
a) providing a non-coloured textile fabric, wherein said fabric has not been previously subjected to a pretreatment for inkjet printing;
b) piezo-electric drop-on-demand inkjet printing one or more inkjet formulation on one side of said fabric, or one or more regions of said side, wherein at least one of said inkjet formulations is an inkjet ink formulation according to the present invention;
c) optionally piezo-electric drop-on-demand inkjet printing one or more inkjet formulation on the other side of said fabric, or one or more regions of said other side, wherein at least one of said inkjet formulations is an inkjet ink formulation according to the present invention;
d) drying the textile by exposure to an air having a temperature from about 120°C to about 140°C to provide a dried textile; and
e) calendering the textile fabric for at least 10 seconds at a temperature from about 140°C to about 180°C to provide a printed, optionally finished, textile fabric.

An additional aspect according to the present invention relates to a process for manufacturing a garment with the printed, optionally finished, textile fabric.

### DETAILED DESCRIPTION OF THE INVENTION

Thus, it is an object of the present invention to address the need for a pigment DOD inkjet ink formulation that is versatile in terms of textile fabrics substrate, does not require additional time-consuming pretreatment and/or post-coating steps and provide printed textile fabrics with excellent rubbing fastness and color development properties, without modifying the hand of the textile and for a time-expedient and environmentally friendly manufacturing process using such ink formulations. The object is achieved by the water-based piezoelectric drop-on-demand (DOD) inkjet ink formulation according to claim 1, and the manufacturing processes according to claims 7 and 14. Preferred embodiments are disclosed in the specification and the dependent claims.

The present invention will be described in more detail below.

Where the present description refers to "preferred" embodiments/features, combinations of these "preferred" embodiments/features are also deemed to be disclosed as long as the specific combination of the "preferred" embodiments/features is technically meaningful.

Unless otherwise stated, the following definitions shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

As used herein, the terms "including", "containing" and "comprising" are used herein in their open-ended, non-limiting sense. It is understood that the various embodiments, preferences and ranges may be combined at will. Thus, for instance a solution comprising a compound A may include other compounds besides A. However, the term "comprising" also covers, as a particular embodiment thereof, the more restrictive meanings of "consisting essentially of" and "consisting of, so that for instance "a solution comprising A, B and optionally C" may also (essentially) consist of A and B, or (essentially) consist of A, B and C. As used herein, the transitional phrase "consisting essentially of" (and grammatical variants) is to be interpreted as encompassing the recited materials or steps and those that do not materially affect the basic and novel characteristic(s) of the claimed invention. Thus, the term "consisting essentially of" should not be interpreted as equivalent of "comprising".

As used herein, the term "about" means that the amount or value in question may be the specific value designated or some other value in its neighborhood. Generally, the term "about" denoting a certain value is intended to denote a range within ± 5 % of the value. As one example, the phrase "about 100" denotes a range of 100 ± 5, i.e. the range from 95 to 105. Preferably, the range denoted by the term "about" denotes a range within ± 3 % of the value, more preferably ± 1 %. Generally, when the term "about" is used, it can be expected that similar results or effects according to the invention can be obtained within a range of ±5 % of the indicated value.

### INKJET INK FORMULATION

Surprisingly, it has been found that a silicone- and fluorine-free formulation having a viscosity from 4 cP to 9 cP, preferably from 4 to 7 cP, at 25°C and a shear rate of 200-400 s⁻¹, and consisting of:
- from 3 wt-% to 15.0 wt-% of a pigment dispersed within the formulation;
- a water-dispersible (meth)acrylic resin;
- a water-dispersible styrene-(meth)acrylic resin;
- a water-dispersible urethane resin;
- up to 2 wt-% of a surfactant;
- from 20 wt-% to 40 wt-% of 1,2,3-propanetriol;
- optionally at least one of a pH adjusting agent, a biocide, a thickening agent and a further water-miscible solvent; and
- water;
wherein
at least one of one of the water-dispersible (meth)acrylic resin, the water-dispersible styrene-(meth)acrylic resin and the water-dispersible urethane resin has a glass transition temperature (Tg) lower than 140°C and higher than or equal to 20°C;
at least one of the water-dispersible (meth)acrylic resin, the water-dispersible styrene-(meth)acrylic resin and the water-dispersible urethane resin has a glass transition temperature (Tg) lower than 20°C; and
a total amount of the water-dispersible (meth)acrylic resin, the water-dispersible styrene-(meth)acrylic resin and the water-dispersible urethane resin is from 7 wt-% to 10 wt-%; is especially suitable for textile printing of a variety of textile fabric substrates by piezoelectric DOD inkjet, does not require additional time-consuming pretreatment and/or post-coating steps and provide printed textile fabrics with excellent rubbing fastness and color development properties, without modifying the textile hand. Advantageously, the formulation does not contain silicones and fluorinated compounds, which are known to be non-biodegradable and even toxic. Unless otherwise specified, the wt-% are based on the total weight of the formulation.

The term "silicone-free composition" refers to a composition that does not contain a silicone/polysiloxane. As used herein, the term "silicone" and "polyxiloxanes" encompasses all polymers containing a polysiloxane moiety including, but not limited to, silicones/polysiloxanes oils, modified polysiloxanes, such as epoxy or/and amino-modified polysiloxanes, and polyether-modified polysiloxanes, and linear multiblock polysiloxane copolymers.

The term "fluorine-free composition" refers to a composition that does not contain a fluorinated compound, such as a per- or polyfluoroalkyl substance (PFAS).

To be compatible with the commercially available piezoelectric DOD inkjet printers, the piezoelectric DOD inkjet ink formulation must have a viscosity from 4 cP to 9 cP, preferably from 4 to 7 cP, at 25°C and a shear rate of 200-400 s⁻¹. The viscosity may be measured with a viscometer BROOKFLIED DVN, flat cone, 50 RPM.

The piezoelectric DOD inkjet ink formulation contains from 3 wt-% to 15.0 wt-%, preferably from 3 wt-% to 10.0 wt-%, more preferably from 3 wt-% to 6 wt-%, much preferably from 3 wt-% to 4.5 wt-% of a pigment dispersed within the formulation. Owing to their composition (combination of the specific water-dispersible resins and solvents in the described amounts), the inks described herein provide even at low pigment content, such as 3 wt-% to 6 wt-%, or 3 wt-% to 4.5 wt-%, strong colour coverage on the printed side with no or very low back-staining.

To avoid clogging of the printhead, the pigment contained in the ink has a particle size characterized by a D95 of between 0.2 µm and 0.3 µm as measured by dynamic light scattering diffraction particle size analysis.

Any of the pigments typically used in this technical field may be used as the pigment. Examples of pigments include organic pigments such as azo-based pigments, phthalocyanine-based pigments, dye-based pigments, condensed polycyclic pigments, nitro-based pigments and nitroso-based pigments, inorganic pigments including metals such as cobalt, iron, chromium, copper, zinc, lead, titanium, vanadium, manganese and nickel, as well as metal oxides and sulfides, and yellow ocher, ultramarine and iron blue pigments, and carbon blacks such as furnace carbon black, lamp black, acetylene black and channel black. Examples of commercially available pigments suitable for being used in the present formulation include Pigment Black 7 (Carbon Black), Pigment Yellow (PY)155, Pigment Red (PR)254, Pigment Blue (PB)15:3, Pigment Blue (PV)23, Pigment Red (PV)19, Pigment Red (PR)122,Pigment Red (PV)19, Pigment Red (PR)254, Pigment Yellow (PY)155, Pigment Orange (PO)34 and Pigment Blue (PV)23.

The piezoelectric DOD inkjet ink formulation further contains a water-dispersible styrene-(meth)acrylic resin, a water-dispersible (meth)acrylic resin and a water-dispersible urethane resin. The combination of the water-dispersible (meth)acrylic resin, the water-dispersible styrene-(meth)acrylic resin and the water-dispersible urethane resin having the glass transition temperatures described herein provides improved wet and dry rubbing fastness, improved colour development and lower back staining compared to the individual water-dispersible resins.

As used herein, the term "water-dispersible resin" encompasses self-emulsifying resins in which a hydrophilic component necessary for being stably dispersed in water is introduced or a resin which becomes water-dispersible by the use of an external emulsifier.

As used herein the term "water-dispersible (meth)acrylic resin" encompasses a single water-dispersible (meth)acrylic resin and a combination of two or more (meth)water-dispersible resins.

A water-dispersible (meth)acrylic resin contains at least a methacrylic unit derived from a methacrylic-based monomer and/or an acrylic unit derived from an acrylic-based monomer. The water-dispersible (meth)acrylic resin may also contain one or more other units, provided these other units do not include a styrene unit derived from a styrene-based monomer described below. Examples of the methacrylic-based monomer and acrylic-based monomer include (meth)acrylate esters such as methyl (meth)acrylate, and (meth)acrylic acid and the like. The term "(meth)acrylic" represents both "acrylic" and "methacrylic", and the term "(meth)acrylate" represents both "acrylate" and "methacrylate".

As used herein the term "water-dispersible styrene-meth)acrylic resin" encompasses a single water-dispersible styrene-(meth)acrylic resin and a combination of two or more water-dispersible styrene-(meth) resins.

A water-dispersible styrene/(meth)acrylic resin contains at least a styrene unit derived from a styrene-based monomer, and a methacrylic unit derived from a methacrylic-based monomer and/or an acrylic unit derived from an acrylic-based monomer. Examples of the styrene-based monomer include styrene, and alkyl-modified styrenes (such as α-methylstyrene).

Examples of commercially available water-dispersible (meth)acrylic resins and water-dispersible styrene/(meth)acrylic resins include Mowinyl 675ID (Tg: -32°C), Mowinyl 6960 (Tg: -32°C), Mowinyl 6963 (Tg: -28°C), Mowinyl 702 (Tg: -19°C), Mowinyl 8020 (Tg: -22°C), Mowinyl 966A (Tg: -29°C), Mowinyl 6718 (Tg: 3°C), Mowinyl 6750 (Tg: 0°C) and Mowinyl 7720 (Tg: 4°C), all manufactured by The Nippon Synthetic Chemical Industry Co., Ltd., Joncryl PDX-7341 (Tg: 15°C), Joncryl PDX-7370 (Tg: 12°C) and Joncryl^{®} HPD 296 KOH (Tg: 15° C), manufactured by BASF Corporation, and NeoCryl A-1094 (Tg: 21°C), NeoCryl BT-62 (Tg: 22°C), manufactured by DSM Coating Resins D.V., Hycar^{®} 26907 (Tg: 22°C), manufactured by Lubrizol and Carboset 527 (Tg: 54°C) manufactured by Lubrizol.

As used herein the term "a water-dispersible urethane resin" encompasses a single water-dispersible urethane resin and a combination of two or more water-dispersible resins. A water-dispersible urethane resin has a urethane skeleton. Examples of resins that may be used as the water-dispersible urethane resin include polyether urethane resins that contain ether linkages in the main chain in addition to the urethane linkages, polyester urethane resins that contain ester linkages in the main chain in addition to the urethane linkages, and polycarbonate urethane resins that contain carbonate linkages in the main chain in addition to the urethane linkages. Among these, polycarbonate urethane resins and polyester urethane resins can be used particularly favourably. A combination of a plurality of these types of water-dispersible urethane resins may also be used.

Preferable examples of water-dispersible urethane resins include anionic urethane resins having an anionic functional group such as carboxyl group, sulfo group or hydroxyl group.

Specific examples of the water-dispersible urethane resin include SUPERFLEX 300 (Tg: -42°C), SUPERFLEX 420 (Tg: -10°C), SUPERFLEX 460 (Tg: -21°C), SUPERFLEX 460S (Tg: -28°C), SUPERFLEX 470 (Tg: -31°C), SUPERFLEX 500M (Tg: -39°C), SUPERFLEX 740 (Tg: - 34°C), and SUPERFLEX 150HS (Tg: 32°C), all manufactured by DKS Co. Ltd., DAOTAN TW 6490/35WA (Tg: 32°C) manufactured by Daicel-Allnex Ltd., TAK.ELAC W-6061 (Tg: 25°C) manufactured by Mitsui Chemicals, Inc., UW-1701F (Tg: 5°C) manufactured by Ube Industries, Ltd and Sancure 777F manufactured by Lubrizol.

At least one of the water-dispersible (meth)acrylic resin, the water-dispersible styrene-(meth)acrylic resin and the water-dispersible urethane resin has a glass transition temperature (Tg) lower than 140°C and higher than or equal to 20°C. Further at least one of the water-dispersible (meth)acrylic resin, the water-dispersible styrene-(meth)acrylic resin and the water-dispersible urethane resin has a glass transition temperature (Tg) lower than 20°C. As known to the skilled person, the glass transition temperature (Tg) is a numerical value measured by a differential scanning calorimetry (DSC) measurement.

The total amount of the water-dispersible (meth)acrylic resin, the water-dispersible styrene-(meth)acrylic resin and the water-dispersible urethane resin is from 7 wt-% to 10 wt-%, thereby ensuring fixation of the pigment to the textile fabric without modifying the textile hand. Within the present patent application, the wt-% indicated for the mixture and the water-dispersible resins refers to the amount of the non-volatile water-dispersible resins in the inkjet ink formulation (i.e. calculated based on the solid or non-volatile content specified for the commercially available products). Preferably, the water-dispersible resin(s) having a Tg lower than 20°C is present in the formulation in a total amount from 0.25 wt-% to 1.5 wt-%. Also preferably, the one water-dispersible resin having a Tg lower than 140°C and higher than or equal to 20°C is present in the formulation in an amount from 2 wt-% to 4 wt-%.

Preferably, at least one of the water-dispersible (meth)acrylic resin, the water-dispersible styrene-(meth)acrylic resin and the water-dispersible urethane resin has a viscosity lower than or equal to 600cP at 25°C and a shear rate of 200-400 s⁻¹.

A preferred embodiment is directed to an ink formulation, wherein a weight ratio of the pigment relative to the total amount of the water-dispersible (meth)acrylic resin, the water-dispersible styrene-(meth)acrylic resin and the water-dispersible urethane resin is from 0.3 to 0.6. Such ink formulation provides excellent rubbing fastness and color development properties to the textile printed thereof and does not impact the textile hand.

The inkjet ink contains up to 2 wt-% of a surfactant. The term "surfactant" is known in the field. It particularly includes compounds that reduce surface tension and / or improve dispersion properties. A person skilled in the art is in a position to identify surfactants suitable for compositions printable by piezoelectric drop-on-demand ink jet. The term includes cationic, anionic, nonionic and zwitterionic surfactants. Preferably, the surfactant is biodegradable and/or obtained from renewable raw materials. Examples of suitable commercially available surfactants include, but are not limited to, rhamnolipids (e.g. biosurfactant REWOFERM^{®} RL 100 commercially available from Evonik), sophorolipids (e.g. biosurfactant REWOFERM^{®} SL ONE commercially available from Evonik), sorbitane monooleate (commercially available under the commercial name Span^{®} 80 from Sigma Aldrich), polyethylene glycol sorbitan monooleate (e.g. Tween^{®} 80 commercially available from Sigma Aldrich), sodium dioctylsulfosuccinate, ethoxylated 2,4,7,9-tetramethyl-5-decyne-4,7-diol, and mixtures thereof (e.g. Surfinol^{®} PSA 336 commercially available from Evonik which is a blend of sodium dioctylsulfosuccinate and ethoxylated 2,4,7,9-tetramethyl-5-decyne-4,7-diol) .

The inkjet ink composition further contains from 20 wt-% to 40 wt-%, preferably from 20 wt-% to 30 wt-%, more preferably from 20 wt-% to 25 wt-%, 1,2,3-propanetriol. The used 1,2,3-propanetriol is preferably of vegetal origin e.g. derived from soybean, coconut, palm or corn oils. The water-miscible 1,2,3-propanetriol in the specified amount renders the compositions stable during the shell-life (at least 12 months) and ejectable by piezoelectric drop-on-demand inkjet printing since it prevents drying of the ink in the DOD piezoelectric inkjet heads and a temperature increase in the channel of said inkjet head. Further, the 1,2,3-propanetriol in the specified amount promotes the adhesion of the ink on the side of the fabric on which it is printed and prevents the migration of the ink on the other side of said fabric and the resulting back-staining.

The inkjet ink composition may further contain a pH adjusting agent and/or a biocide and/or a thickening agent and/or a further water-miscible solvent.

Preferably, the inkjet ink formulation has a pH value of between 5 and 9. The pH value depends on the intended use (e.g. softening, water-repellency) and the stability conditions of the inkjet ink formulation, as well as on the performance and effect obtained on the fabric. If required, the inkjet ink formulation may further contain up to 0.5 wt-% a pH adjusting agent, preferably of vegetal origin. Preferably, the pH adjusting agent is selected from acetic acid, citric acid, ascorbic acid, malic acid, etc. Preferably, citric acid is used for adjusting the pH value of the composition in the pH value range from 5 to 7, while acetic acid is used for adjusting the pH value of the composition in the pH value range from 7 to 9.

The inkjet ink composition may contain up to 0.5 wt-% of a biocide. The biocide prevents biodeterioration of the textile, assists in preventing spread of infectious diseases without requiring the need for frequent sterilization and ensures the stability of the inkjet ink formulation for at least 12 months. Any conventionally used biocide in textile industry is suitable to be used in the textile finishing composition according to the present invention. Such biocides include, but are not limited to, 1,2-benzisothiazolin-3-one (commercially available at Zeneca Specialties as a solution sold under the commercial name Proxel GXL), organo-copper compounds, organo-tin compounds, chlorinated phenols, silver-based microbial agents and metal-based inorganic compounds, such as zinc oxide, zinc salts and cupric salts.

The inkjet ink composition may contain up to 1.0 wt-% of a thickening agent. As well known to the skilled person, a thickening agent or a thickener is a substance that increases the viscosity of a liquid without substantially changing its other properties. A person skilled in the art is in a position to adjust the amount of the thickening agent so as to obtain the viscosity required for the textile finishing composition. Preferably, the thickening agent is a polysaccharide (e.g. starches, vegetable gums) of vegetal origin and a water-dispersible polyester resin, such as Vylonal MD-2000 (Tg: 67°C) manufactured by Toyobo. Examples of suitable polysaccharide thickening agents include, but are not limited to, carob (also known as locust bean gum or carob gum containing at least 75% galactomannan), such as commercially available Carob EXC 25 from HEIQ - Switzerland, guar gum, carrageenan, and alginin. Advantageously, the thickening agent is commercially available and easily dispersible in water upon mixing. In a preferred embodiment, the thickening agent, if present, is a polysaccharide thickening agent. In a further preferred embodiment, the inkjet ink composition does not contain a thickening agent, but may contain the biocide described herein and/or the pH adjusting agent described herein.

The inkjet ink composition may contain from 1 wt-% % to 15 wt-%, preferably from 5 wt-% to 12.5 wt-%, more preferably from 7.5 wt-% to 10 wt-% of a further water-miscible solvent preferably selected from
- alcohols, such as methanol, ethanol, 1-propanol, isopropanol, 1-butanol, 2-butanol, isobutanol, 1,3-propanediol, 1,3-butanediol, 1,2-butanediol, 1,2-pentanediol, 1,2-hexanediol and 2-methyl-2-propanol;
- glycols such as ethylene glycol, diethylene glycol, triethylene glycol, tetraethylene glycol, pentaethylene glycol, propylene glycol, dipropylene glycol and tripropylene glycol; glycerol;
- glycol derivatives such as diethylene glycol monomethyl ether, diethylene glycol monobutyl ether, diethylene glycol dimethyl ether, diethylene glycol monoethyl ether acetate, triethylene glycol monomethyl ether, triethylene glycol monoethyl ether, triethylene glycol monopropyl ether, triethylene glycol monobutyl ether, tripropylene glycol monobutyl ether, triethylene glycol monohexyl ether, tetraethylene glycol monomethyl ether, tetraethylene glycol monoethyl ether, tetraethylene glycol monobutyl ether, tetraethylene glycol dimethyl ether and tetraethylene glycol diethyl ether; and
- mixtures thereof.

In a preferred embodiment, the further water miscible solvent is selected from ethylene glycol, 1,2-propylene glycol, diethylene glycol and mixtures thereof, more preferably a mixture of ethylene glycol and diethylene glycol, or a mixture of ethylene glycol, propylene glycol and diethylene glycol.

### INK SET

A second aspect according to the present invention is directed to an ink set comprising at least three blendable inks, wherein each ink in the ink set is an inkjet ink formulation according to the present invention. The blendable inks may comprise
(i) an yellow inkjet ink formulation, a cyan inkjet ink formulation, a magenta inkjet ink formulation, optionally black inkjet ink formulation, optionally white ink; or
(ii) an yellow inkjet ink formulation, a cyan inkjet ink formulation, a magenta inkjet ink formulation, a black inkjet ink formulation, an orange inkjet ink formulation and a blue inkjet ink formulation; or
(iii) an yellow inkjet ink formulation, a cyan inkjet ink formulation, a magenta inkjet ink formulation, a black inkjet ink formulation, an orange inkjet ink formulation, a blue inkjet ink formulation, a violet inkjet ink formulation and a green inkjet ink formulation; or
(iv) an yellow inkjet ink formulation, a cyan inkjet ink formulation, a magenta inkjet ink formulation, a black inkjet ink formulation, an orange inkjet ink formulation, a red inkjet ink formulation, a blue inkjet ink formulation, a violet inkjet ink formulation and a green inkjet ink formulation.

### MANUFACTURING PROCESS

A third aspect according to the present invention is directed to a process for manufacturing a printed, optionally finished, textile fabric comprising, preferably consisting of, the following steps:
a) providing a non-coloured textile fabric, wherein said fabric has not been previously subjected to a pretreatment for inkjet printing;
b) piezo-electric drop-on-demand inkjet printing one or more inkjet formulations on one side of said fabric, or one or more regions of said side, wherein at least one of said inkjet formulations is an inkjet ink formulation as claimed and described herein;
c) optionally piezo-electric drop-on-demand inkjet printing one or more inkjet formulations on the other side of said fabric, or one or more regions of said other side, wherein at least one of said inkjet formulations is an inkjet ink formulation as claimed and described herein;
d) drying the textile by exposure to an air having a temperature from about 120°C to about 140°C to provide a dried textile; and
e) calendering the textile fabric for at least 10 seconds at a temperature from about 140°C to about 180°C to provide a printed, optionally finished, textile fabric.

Advantageously, the manufacturing process does not require a pretreatment step of the textile fabric prior to the printing step b) and/or a post-coating step for protecting the printed image with a resin. Hence, the manufacturing process is environmentally friendly in terms of water, chemicals and energy consumption, and provides printed, optionally finished, textile fabrics exhibiting excellent rubbing fastness and color development properties in a time-expedient manner that is compatible with the textile industry requirements.

As used herein, the term "textile fabric" is intended to encompass all forms of textile substrates, including woven, knitted and non-woven textile substrates. The term is intended to exclude fibrous substrates having two-dimensional rigidity such as carpets, paper and cardboard. The fibrous substrates, although sometimes referred as textiles, are internally linked in such a way that they maintain a substantially fixed two-dimensional form. Even though they may be flexible in a third dimension they are not generally free to stretch or distort within the plane of the fiber layer, as is inherent in a true textile. Preferably, the textile is more than 100 meters (e.g. 500 meters) in length and can be provided on a roll having a width of greater than 1 meter. Preferably, the textile is a woven, knitted or nonwoven textile fabric. The fabric preferably contains synthetic and/or natural fibers, preferably selected from silk fibers, cellulose fibers, elastane fibers, polyamide fibers and polyester fibers. In certain embodiments, the fabric may contain fibers of animal origin, such as down, wool, leather or fur.

The term "non-coloured textile fabric" refers to a fabric made of fibers that have not been previously contacted with a colorant.

The textile fabric provided at step a) has not been previously subjected to a pretreatment process for inkjet printing. As known to the skilled person in the field of pigment inks for textile printing, the pretreatment process is a process of applying (e.g. by immersion, coating or spraying) a pretreatment agent or coagulant, such as a polyvalent metal salt and/or a cationic polymers, to the textile fabric prior to the printing step. The pretreatment agent reacts with the components of the applied ink, in particular with the pigments and resins contained in said ink. Pretreatment agents or coagulants are well known in the art and include the one described in US 2014/0210900 A1 and US 2019/0352528 A1.

At step b) of the process claimed and described herein, one or more inkjet formulations are applied by piezoelectric drop-on-demand ink jet printing on a side of the textile fabric, or on one or more regions of a side of the textile fabric. At least one of the inkjet formulations is an inkjet ink formulation according to the present invention. Advantageously, the use of the piezoelectric drop-on-demand inkjet printing enables selective deposit of the one or more inkjet ink formulations on a side of a textile or one or more regions (areas) of a side of a substrate.

As well known in the art, the term "side" refers to the front side or the back side of a textile fabric.

The manufacturing process claimed and described herein optionally contains step c), wherein one or more inkjet formulations are applied by piezoelectric drop-on-demand ink jet printing on the other side of said fabric, or one or more regions of said other side. At least one of said inkjet formulations is an inkjet ink formulation according to the present invention.

Conveniently, the manufacturing process claimed and described herein enables the simultaneous application of several inkjet formulations on a region (area) of the textile with a single piezoelectric drop-on-demand ink jet printhead. Preferably, at step b) and/or c) of the inventive process at least two, preferably at least three, more preferably at least four (e.g. five, six, seven, eight, nine or ten) distinct inkjet formulations are applied with a single piezoelectric drop-on-demand ink jet printhead. The wet deposit for the at least two, preferably at least three, more preferably at least inkjet formulations may be the same or different.

In one embodiment, one or more of the inkjet formulations applied at step b) and/or c) are textile finishing compositions. The term "textile finishing composition" refers to a ready-to-use aqueous colorless composition, which is printable by piezoelectric drop-on-demand ink jet printing and contains one or more finishing agents i.e. substances that change a property, other than a color, of a textile. The term "textile finishing composition" does not encompass compositions used in post-coating processes for protecting the image printed with a pigment ink with a resin layer containing no colorant. Preferably, the textile finishing composition is selected from the group consisting of a textile softening compositions, water-repellent textile finishing compositions, and textile finishing compositions for improving the wicking properties. Particularly suitable compositions are described in the pending patent application filing number PCT/EP2023/085415.

At step d) of the present process, the textile fabric obtained at step b) or at step c) is subjected to drying to evaporate the water contained in the textile finishing compositions and furnish a dried textile. This step is achieved by exposure of the printed textile to an air having a temperature from about 120°C to about 140°C. The exposure time depends on the surface density (g/m²) of the deposited inkjet formulation(s) and the used temperature and is preferably lower than 3 minutes, more preferably lower than 2 minutes, much preferably about 1 minute, and meets the speed-requirements of the industrial manufacturing processes for textiles.

The dried textile is subsequently calendered for at least 10 seconds, preferably for about 30 seconds, at a temperature from about 140°C to about 180°C to provide the printed, optionally finished, textile fabric. Preferably, the dried textile is calendered for less than 60 seconds. The pressure of the calender can be adjusted between 0 and 6 bars so that the rolls of the calender are in contact with the dried textile. Preferably, the pressures applied during the calendering step are from 2 to 4 bars. This step ensures the fixation of the pigment, and if present of the finishing agent, to the textile fibers.

In one embodiment, the process according to the present invention contains, preferably consists of, the steps a), b), c), d) and e) .

Preferably, steps a), b), d) and e), or a), b), c), d) and e) of the process claimed and described herein are carried out continuously. In this embodiment, the units for the continuous supply of the textile, the piezoelectric drop-on-demand ink-jet printing, the drying and the fixing are mounted one after another and the textile is moved through them continuously. The units for steps a), b), d) and e), or a), b), c), d) and e) can also be combined in a single machine. The textile is transported continuously through the machine and is thus in the finished state when it leaves the machine.

The present process may be conducted using a commercially available industrial textile printer (e.g. Panthera D8 or Panthera S4 from Swiss Performance Chemicals; LaRIO from MS Printing Solutions) or the EFI Reggiani HYPER from Reggiani and a calender (rotary heat press roll to roll).

With the process claimed and described herein printing speeds of about 50 m/min may be achieved.

The printed, optionally finished, textile fabric may be an indigo-free fabric having a visual appearance of a denim. In such case, at step b) of the process claimed and described herein a parallel straight lines pattern is printed on the one side of the fabric, or a region of said one side of the fabric, to provide a visual appearance of a back side of a denim, wherein said one side of the fabric is the back side of the fabric; and
at step c) a pattern is printed on the other side of the fabric, or a region of said other side of the fabric, to provide a visual appearance of a front side of a denim, wherein said other side of the fabric is the front side of the fabric. Preferably, a distance between each two adjacent lines is from 0.1 mm to 5 mm, and the lines have a width from 0.1 mm to 2 mm; and/or
the textile fabric is a woven fabric with a diagonal rib and the parallel straight lines are printed at an angle from 60° to 120° with respect to the rib.

Also claimed and described herein is process for manufacturing a garment comprising the step of converting the printed, optionally finished, textile fabric into a garment. The garment may be e.g. a jeans, a jacket, a shirt, a skirt, a dress, or a scarf.

### USE

A fourth aspect according to the present invention is directed to a use of the inventive inkjet ink formulation or of the ink set thereof for printing a textile fabric.

### EXAMPLES

To further illustrate the invention, the following **examples** are provided. These examples are provided with no intend to limit the scope of the invention.

**Table 1: Ingredients**

| Ingredient | Commercial Name / Supplier | |
|---|---|---|
| Pigment | Pigment Black 7 (Carbon Black) | |
| Pigment | Pigment Blue (PB)15:3 | |
| Pigment | Pigment Blue (PV)23 | |
| Pigment | Pigment Red (PR)122 | |
| Pigment | Pigment Red (PV)19 | |
| Pigment | Pigment Red (PR)254 | |
| Pigment | Pigment Yellow (PY)155 | |
| Pigment | Pigment Orange (PO) 34 | |
| Biocide | Proxel^{™} GXL | 20% aqueous dipropylene glycol solution of 1,2-benzisothiazolin-3-one (biocide) |
| Surfactant | Surfinol^{®} PSA 336 (Evonik) | Blend of sodium dioctylsulfo succinate and ethoxylated 2,4,7,9-tetramethyl-5-decyne-4,7-diol surfactants |
| Water-miscible solvent | Pricerine^{™} 9091 (Croda) | vegetal 1,2,3-propanetriol (CAS Nr. 56-81-5) |
| Water-miscible solvent | | propylene glycol (propane-1,2-diol, CAS Nr. 57-55-6) |
| Water-miscible solvent | | Diethylene glycol (2,2'-Oxydiethanol; CAS Nr.: 111-46-6) |
| Water-dispersible acrylic resin | Carboset 527 (Lubrizol) | Thermoplastic acrylic resin (100% solid content; Tg = 54°C; viscosity: < 3000 mPa.s at 25°C) |
| Water-dispersible acrylic resin | Hycar^{®} 26907 (Lubrizol) | Carboxylated acrylic resin (48% solid content; Tg = 31°C; viscosity: 20 mPa.s at 25°C) |
| Water-dispersible urethane resin | SANCURE 777F (Lubrizol) | Aliphatic Waterborne Urethane Dispersion (35% solid content; viscosity: < 500 mPa.s at 25°C) |
| Water-dispersible styrene- acrylic resin | Joncryl HPD 296 KOH (BASF) | Styrene acrylic resin dispersion (35.5% solid content; Tg = 15°C; Viscosity: 600 mPa.s at 25°C) |
| Water-dispersible urethane resin | SUPERFLEX 460 (Daiichi Kogyo Seiyaku) | Urethane resin dispersion (38 wt-% non-volatile content Tg = -21°C; Viscosity: ≤500 mPa.s at 20°C) |

### I. Preparation of the pigment dispersions

The following four dispersions CMYK were prepared by mixing the materials shown in Table 2.

**Table 2: Compositions CMYK Dispersions**

| | **Non-volatile fraction concentration (wt-%)** | **Dispersions (wt-%)** | | | |
|---|---|---|---|---|---|
| | | C | M | Y | K |
| **Pigment** | | | | | |
| Blue (PB)15:3 | | 15 | - | - | - |
| Red (PR)122 | | - | 15 | - | - |
| Yellow (PY)155 | | - | - | 12 | - |
| Black 7 | | - | - | - | 15 |
| **Water-dispersible resin** | | | | | |
| Joncryl^{®} HPD 296 | 35.5 | 8 | 8 | 6 | 8 |
| **Solvents** | | | | | |
| Ethylene Glycol | | 11 | 11 | 10 | 12 |
| Glycerol | | 10 | 10 | 6 | 10 |
| Water | | 56 | 56 | 66 | 55 |

### II. Preparation of the ink formulations

Starting from the dispersions CMYK depicted by Table 2, the following eight ink formulations were prepared by mixing said dispersions with the materials shown in Table 3 for 4 hours. The resulting mixtures were subjected to microfiltration to provide the CMYK inks. The viscosity was measured at 25°C and a shear rate of 200s⁻¹ with a viscometer BROOKFLIED DVN, flat cone, 50 RPM.

**Table 3: Compositions CMYK ink formulations**

| | **Non-volatile fraction concentrat ion (wt-%)** | **Ink formulations (wt-%)** | | | | | | | |
|---|---|---|---|---|---|---|---|---|---|
| | | C1 | C2 | M1 | M2 | Y1 | Y2 | K1 | K2 |
| **Pigment** | | | | | | | | | |
| Blue (PB)15:3 | | 4.2 | 4.2 | - | - | - | - | - | - |
| Red (PR)122 | | - | - | 4.2 | 4.2 | - | - | - | - |
| Yellow (PY)155 | | - | - | - | - | 3.0 | 3.0 | - | |
| Black 7 | | - | - | - | - | - | - | 4.5 | 4.5 |
| | | | | | | | | | |
| **Water-dispersible resin** | | | | | | | | | |
| Joncryl^{®} HPD 296 | 35.5 | 2.24 | 2.74 | 2.24 | 2.84 | 1.5 | 2.5 | 2.4 | 2.7 |
| SANCURE^{™} 777F | 35 | 13 | 13 | 13 | 13 | 13 | 13 | 13 | 13 |
| SUPERFLEX 460 | 38 | - | 0.4 | - | 0.8 | - | 0.5 | - | 1 |
| Carboset 527 | 100 | 1 | 1 | 1 | 1 | 1 | 1 | 1 | 1 |
| Hycar^{®} 26907 | 48 | 4 | 4 | 4 | 4 | 4 | 4 | 4 | 4 |
| **Total non-volatile content** | | 8.27 | 8.59 | 8.27 | 8.78 | 8.00 | 8.54 | 8.32 | 8.81 |
| | | | | | | | | | |
| **Solvents** | | | | | | | | | |
| Glycerol | | 24.8 | 24.8 | 24.8 | 24.8 | 23.5 | 23.5 | 25 | 25 |
| Propyleneglycol | | - | 1 | - | 1 | - | 1 | - | 1 |
| Diethyleneglycol | | 5 | 5 | 5 | 5 | 5 | 5 | 5 | 5 |
| Ethyleneglycol | | 3.1 | 3.1 | 3.1 | 3.1 | 2.5 | 2.5 | 3.6 | 3.6 |
| | | | | | | | | | |
| **Biocide** | | | | | | | | | |
| Proxel^{™} GXL | | 0.2 | 0.2 | 0.2 | 0.2 | 0.2 | 0.2 | 0.2 | 0.2 |
| | | | | | | | | | |
| **Surfactant** | | | | | | | | | |
| Surfinol^{®} PSA 336 | | 0.6 | 0.6 | 0.6 | 0.6 | 0.6 | 0.6 | 0.6 | 0.6 |
| | | | | | | | | | |
| Water (solvent) | | Balance to 100 wt-% | | | | | | | |
| **Viscosity (cP)** | | 4.6 | 5.1 | 4.5 | 4.9 | 4.4 | 4.9 | 4.3 | 5 |
| **Weight ratio¹** | | 0.51 | 0.49 | 0.51 | 0.48 | 0.38 | 0.35 | 0.54 | 0.51 |

| | | | | | | | | | |
|---|---|---|---|---|---|---|---|---|---|
| ¹ weight ratio of the pigment relative to the total amount (non-volatile content) of the water-dispersible (meth)acrylic resin, the water-dispersible styrene-(meth)acrylic resin and the water-dispersible urethane resin. | | | | | | | | | |

### Production of printed textile fabrics

The CMYK inks were printed by piezoelectric drop-on-demand ink jet printing (Machine Panthera S4 from Swiss Performance Chemicals AG - Switzerland; printing resolution 600x600dpi, 2 passes; printing speed 250 m²/h; wet deposit: 6-12g/m²) on a surface of a textile fabric. The printed textiles were dried by exposure to hot air (120 to 140°C) for 90 seconds. Subsequently, the dried textiles were calendered for 30 sec at 140°C and an average pressure of 3 bars to provide the printed textile fabrics.

The following fabrics were tested:
- White 100% Cotton Satin 120 g/m²
- White 100% Cotton (Toile Popline)130 g/m²
- White Cotton/PES 80/20 % Toile 135 g/m²
- White 100% PES Natt6 210 g/ m²

Previously to the printing step, the fabrics have not been subjected to a pretreatment for inkjet printing.

### III. Evaluation of the properties of the printed textiles

The textile hand, colour development, dry rubbing fastness, wet rubbing fastness and back staining of the produced printed textile fabrics were evaluated using the methods described below. The results obtained with inks C2, M2, Y2, and K2 and the 100% cotton satin substrate are summarized in Table 4. Similar or better results were obtained for the other three tested substrates

### TEXTILE HAND

An expert in the field compared the original textile fabric (i.e. the textile fabric before printing) with the printed textile fabric obtained as described at section III.

The evaluation criteria for textile hand modification are as follows:
***: no modification of the hand of the textile fabric;
**: slight modification of hand of the textile fabric;
*: significant modification of the hand of the textile fabric (feeling of rigidity).

### COLOR DEVELOPMENT

The colour development was evaluated by measuring the optical density (OD) value using a colorimeter for the maximum color saturation taken 100% as reference. The following criteria were used for evaluating the colour development:
***: OD value of 100%;
**: OD value of between 98 and 100%;
*: OD value lower than 98%.

### DRY RUBBING FASTNESS & WET RUBBING FASTNESS

The rubbing fastness indicative of the quality of adhesion of the pigment to the textile fabric was evaluated using a crockmeter.

Specifically, the printed fabric sample was rubbed with a white 100% cotton crocking cloth under a defined pressure (9 Newton) by moving the fabric back and forth in a straight line. For testing the rubbing fastness in a wet state (wet rubbing fastness), a wet white 100% cotton crocking cloth was used. Because of the mechanical abrasion, parts of the pigments are transferred from the printed textile fabric to the crocking cloth, leading to a decolouration of the printed textile fabric. The intensity of the colouring is assessed using a five-point scale (called grey scale). Level (or grade) 1 is the lowest value, level 5 is the best value. At level 5, the colour of the cotton crocking cloth is unchanged.

### BACK-STAINING

The back staining was evaluated by measuring the optical density (OD) value on the printed side (front side) of the textile fabric and the back side of the textile fabric using a colorimeter. The following criteria were used for evaluating the back staining:
***: Very low colour on the back side compared to the front side (OD measured on the back side lower than 30 of the OD measured on the front side);
**: Low colour on the back side compared to the front side (OD measured on the back side between 3% and 50 of the OD measured on the front side).
*: Visible colour on the back side (OD measured on the back side higher than 50 of the OD measured on the front side).

**Table 4: Properties printed 100% cotton satin substrate**

| | C2 | M2 | Y2 | K2 |
|---|---|---|---|---|
| Hand | *** | *** | *** | *** |
| Colour development | *** | *** | *** | *** |
| Dry Rubbing fastness | 4-4.5 | 4-4.5 | 4-4.5 | 3-3.5 |
| Wet rubbing fastness | 3.5-4 | 3.5-4 | 4-4.5 | 2.5-3 |
| Back staining | *** | *** | *** | *** |

## Claims

**1.** A silicone- and fluorine-free water-based piezoelectric drop-on-demand inkjet ink formulation for textile printing,
wherein said formulation has a viscosity from 4 cP to 9 cP, preferably from 4 to 7 cP, at 25°C and a shear rate of 200-400 s⁻¹, and consists of:
- from 3 wt-% to 15.0 wt-% of a pigment dispersed within the formulation;
- a water-dispersible (meth)acrylic resin;
- a water-dispersible styrene-(meth)acrylic resin;
- a water-dispersible urethane resin;
- up to 2 wt-% of a surfactant;
- from 20 wt-% to 40 wt-% of 1,2,3-propanetriol;
- optionally at least one of a pH adjusting agent, a biocide, a thickening agent and a further water-miscible solvent; and
- water;
wherein
at least one of the water-dispersible (meth)acrylic resin, the water-dispersible styrene-(meth)acrylic resin and the water-dispersible urethane resin has a glass transition temperature (Tg) lower than 140°C and higher than or equal to 20°C;
at least one of the water-dispersible (meth)acrylic resin, the water-dispersible styrene-(meth)acrylic resin and the water-dispersible urethane resin has a glass transition temperature (Tg) lower than 20°C; and
a total amount of the water-dispersible (meth)acrylic resin, the water-dispersible styrene-(meth)acrylic resin and the water-dispersible urethane resin is from 7 wt-% to 10 wt-%;
wherein the wt-% are based on the total weight of the composition.

**2.** The inkjet ink formulation according to claim 1, wherein at at least one of the water-dispersible (meth)acrylic resin, the water-dispersible styrene-(meth)acrylic resin and the water-dispersible urethane resin has a viscosity lower than or equal to 600cP at 25°C and a shear rate of 200-400 s⁻¹.

**3.** The inkjet ink formulation according to claim 1 or 2, wherein a weight ratio of the pigment relative to the total amount of the water-dispersible (meth)acrylic resin, the water-dispersible styrene-(meth)acrylic resin and the water-dispersible urethane resin is from 0.3 to 0.6.

**4.** The inkjet ink formulation according to any of the previous claims, wherein said formulation does not contain a thickening agent.

**5.** The inkjet ink formulation according to any one of the previous claims, wherein said formulation contains from 1 wt-% to 15 wt-%, preferably from 5 wt-% to 12.5 wt-%, more preferably from 7.5 wt-% to 10 wt-%, of a further water-miscible solvent and/or said water-miscible solvent is selected from ethylene glycol, propylene glycol, diethylene glycol and mixtures thereof.

**6.** An ink set comprising at least three blendable inks, wherein each ink in the ink set is an inkjet ink formulation according to any one of claims 1 to 5.

**7.** A process for manufacturing a printed, optionally finished, textile fabric comprising, preferably consisting of, the following steps:
a) providing a non-coloured textile fabric, wherein said fabric has not been previously subjected to a pretreatment for inkjet printing;
b) piezo-electric drop-on-demand inkjet printing one or more inkjet formulation on one side of said fabric, or one or more regions of said side, wherein at least one of said inkjet formulations is an inkjet ink formulation according to any one of the previous claims;
c) optionally piezo-electric drop-on-demand inkjet printing one or more inkjet formulation on the other side of said fabric, or one or more regions of said other side, wherein at least one of said inkjet formulations is an inkjet ink formulation according to any one of the previous claims;
d) drying the textile by exposure to an air having a temperature from about 120°C to about 140°C to provide a dried textile; and
e) calendering the textile fabric for at least 10 seconds at a temperature from about 140°C to about 180°C to provide a printed, optionally finished, textile fabric.

**8.** The process according to claim 7, wherein the process contains, preferably consists of, the steps a), b), c), d) and e).

**8.** The process according to any one of the previous claims, wherein the textile fabric contains synthetic and/or natural fibers, preferably selected from silk fibers, cellulose fibers, elastane fibers, polyamide fibers and polyester fibers.

**9.** The process according to any one of the previous claims, wherein the steps a), b), c), d) and e) are carried out continuously.

**10.** The process according to any one of the previous claims, wherein at step b) and/or c) at least two, preferably at least three, more preferably at least four inkjet formulations are printed with a single piezoelectric drop-on-demand ink jet printhead.

**11.** The process according to any one of the previous claims, wherein one or more of the inkjet formulations are textile finishing compositions, wherein preferably the textile finishing compositions are selected from the group consisting of textile softening compositions, water-repellent textile finishing compositions, and textile finishing compositions for improving the wicking properties.

**12.** The process according to any one of the previous claims, wherein the printed, optionally finished, textile fabric is an indigo-free fabric having a visual appearance of a denim, and wherein
at step b) a parallel straight lines pattern is printed on the one side of the fabric, or a region of said one side of the fabric, to provide a visual appearance of a back side of a denim, wherein said one side of the fabric is the back side of the fabric;
and
at step c) a pattern is printed on the other side of the fabric, or a region of said other side of the fabric, to provide a visual appearance of a front side of a denim, wherein said other side of the fabric is the front side of the fabric.

**13.** The method according to claim 12, wherein a distance between each two adjacent lines is from 0.1 mm to 5 mm, and the lines have a width from 0.1 mm to 2 mm; and/or
the fabric is a woven fabric with a diagonal rib and the parallel straight lines are printed at an angle from 60° to 120° with respect to the rib.

**14.** A process for manufacturing a garment comprising the step of converting the printed, optionally finished, textile fabric according to any one of claims 7 to 13 into a garment.

**15.** A use of the inkjet ink formulation according to any one of claims 1 to 5 or of the ink set according to claim 6 for printing a textile fabric.
